# EUROPEAN PATENT APPLICATION

(11) **EP 4 704 391 A1**
(43) Date of publication of application: **04.03.2026**
(21) Application number: 24198139.8
(22) Date of filing: 03.09.2024
(51) Int. Cl.: H04L 41/142, H04L 41/14, H04L 43/50

(54) **DIGITAL TWIN OF A NETWORK**

(71) Applicant: Nokia Solutions and Networks Oy, 02610 Espoo (FI)
(72) Inventor: DUPUIS, Nicolas, 4051 Chaudfontaine (BE); DELABY, Olivier, 5101 Loyers (BE); DIERICKX, Philippe, 1450 Saint-Gery (BE); VAN DAMME, Axel, 5101 Loyers (BE)
(74) Representative: Collingwood-Pierce, Alexandra Isobel Seymour

(57) **Abstract**

Disclosed herein is a system implementing a digital twin of a network, the system comprising: means for selecting one or more first values, wherein each first value represents a respective parameter of a configuration of the network and is selected from a probabilistic distribution associated with the respective parameter of the configuration of the network; means for selecting one or more second values, wherein each second value represents a respective parameter of a service to be executed on one or more end devices of the network and is selected from a probabilistic distribution associated with the respective parameter of the service to be executed, each service associated with transmission of one or more data packets through the network; means for determining, based on the one or more selected second values, a time sequence representing a volume of data to be injected into the network at each of one or more time intervals; means for determining, based on the one or more selected first values and the time sequence, a flow of the volume of data through the network; and means for outputting information indicative of the flow of the volume of data. A method for implementing a digital twin of a network and a computer program are also disclosed.

## Description

### Field

Example embodiments relate to a system, method, and computer program for providing a digital twin of a network. The network can be any access network and associated nodes. The digital twin is configured to provide information indicative of a flow of data through the network. In some examples, the digital twin is used in the context of Digital Subscriber Line (DSL) or passive optical network (PON) networks.

### Background

A simulator is a device, software program, or system that is designed to replicate the behaviour of a real-world system, process, or environment. Simulators are used in a wide range of fields, including aviation, engineering, healthcare, and entertainment, to train individuals, test designs, and improve performance. Simulators use mathematical models/algorithms to create a realistic representation of the system or process being simulated. By adjusting variables and inputs, simulators can test different scenarios and predict outcomes. In this way, a simulation replicates what could happen to a system or object. However, simulators are not perfect representations of reality. They are created to mimic the behaviour of a real-world system, process, or environment as closely as possible, but there are always limitations to the accuracy of the simulation, and there are always factors that are not captured in the simulation.

A digital twin by contrast is a virtual representation of a physical object, system, or process. It is a digital model that uses data and algorithms to simulate and predict the behaviour and performance of the physical object or entity. In this way, a digital twin copies real-world processes (within a digital environment) to digitally replicate or mirror what is happening to a specific physical object, system or entity in the real-world.

The concept of a digital twin has emerged as a way to improve efficiency, productivity, and quality in various industries. For example, in manufacturing a digital twin can simulate (or represent) the entire production process, from design to assembly, allowing engineers to optimize performance, predict maintenance needs, and reduce downtime. In addition to manufacturing, digital twins are used in fields such as healthcare, transportation, and construction. In healthcare, digital twins can be used to simulate and analyse the behaviour of organs or biological systems, helping doctors to develop personalized treatment plans. In transportation, digital twins can simulate traffic patterns, optimize routing, and improve safety.

Digital twins are considered an improvement over simulators in many ways, as they provide a more accurate representation of the physical system or process being modelled. Digital twins can simulate and predict the behaviour of the physical system under different conditions, allowing engineers and operators to optimize performance, identify potential problems, and make informed decisions. This improved predictive capability can help prevent downtime, reduce maintenance costs, and improve safety of the physical system/process. Another advantage of digital twins is their ability to incorporate the use of machine learning and other advanced analytics techniques. By analysing large amounts of data, digital twins can identify patterns and make predictions that would be difficult or impossible with traditional simulators. While simulators still have their place in many industries, the improved accuracy, predictive capability, and advanced analytics of digital twins are making them an increasingly important tool for optimizing performance, improving safety, and reducing costs of real-world physical objects, systems or entities.

In the context of telecommunication networks, there are significant benefits to having reliable digital representations of networks within such a digital twin. However, it can be challenging to create such digital representations, and particularly to create representations which accurately reflect the interplay between the access network and a user's home (or end) network, devices and services and their associated behaviours and mechanisms.

It is therefore desirable to provide a digital twin of a network to facilitate assessment of the capacity and/or bandwidth requirements and optionally to find an optimal configuration for the network.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, this specification describes a system implementing a digital twin of a network, the system comprising: means for selecting one or more first values, wherein each first value represents a respective parameter of a configuration of the network and is selected from a probabilistic distribution associated with the respective parameter of the configuration of the network; means for selecting one or more second values, wherein each second value represents a respective parameter of a service to be executed on one or more end devices of the network and is selected from a probabilistic distribution associated with the respective parameter of the service to be executed, each service associated with transmission of one or more data packets through the network; means for determining, based on the one or more selected second values, a time sequence representing a volume of data to be injected into the network at each of one or more time intervals; means for determining, based on the one or more selected first values and the time sequence, a flow of the volume of data through the network; and means for outputting information indicative of the flow of the volume of data.

According to a second aspect, this specification describes a method for implementing a digital twin of a network, the method comprising: selecting one or more first values, wherein each first value represents a respective parameter of a configuration of the network and is selected from a probabilistic distribution associated with the respective parameter of the configuration of the network; selecting one or more second values, wherein each second value represents a respective parameter of a service to be executed on one or more end devices of the network and is selected from a probabilistic distribution associated with the respective parameter of the service to be executed, each service associated with transmission of one or more data packets through the network; determining, based on the one or more selected second values, a time sequence representing a volume of data to be injected into the network at each of one or more time intervals; determining, based on the one or more selected first values and the time sequence, a flow of the volume of data through the network; and outputting information indicative of the flow of the volume of data.

According to a third aspect, this specification describes a computer program comprising instructions for causing an apparatus to: select one or more first values, wherein each first value represents a respective parameter of a configuration of the network and is selected from a probabilistic distribution associated with the respective parameter of the configuration of the network; select one or more second values, wherein each second value represents a respective parameter of a service to be executed on one or more end devices of the network and is selected from a probabilistic distribution associated with the respective parameter of the service to be executed, each service associated with transmission of one or more data packets through the network; determine, based on the one or more selected second values, a time sequence representing a volume of data to be injected into the network at each of one or more time intervals; determine, based on the one or more selected first values and the time sequence, a flow of the volume of data through the network; and output information indicative of the flow of the volume of data.

According to a fourth aspect, this specification describes a computer-readable medium comprising instructions which, when executed by one or more processors, cause the one or more processors to: select one or more first values, wherein each first value represents a respective parameter of a configuration of the network and is selected from a probabilistic distribution associated with the respective parameter of the configuration of the network; select one or more second values, wherein each second value represents a respective parameter of a service to be executed on one or more end devices of the network and is selected from a probabilistic distribution associated with the respective parameter of the service to be executed, each service associated with transmission of one or more data packets through the network; determine, based on the one or more selected second values, a time sequence representing a volume of data to be injected into the network at each of one or more time intervals; determine, based on the one or more selected first values and the time sequence, a flow of the volume of data through the network; and output information indicative of the flow of the volume of data.

According to a fifth aspect, this specification describes an apparatus comprising: at least one processor; and at least one memory including computer program code which, when executed by the at least one processor, causes the apparatus to: select one or more first values, wherein each first value represents a respective parameter of a configuration of the network and is selected from a probabilistic distribution associated with the respective parameter of the configuration of the network; select one or more second values, wherein each second value represents a respective parameter of a service to be executed on one or more end devices of the network and is selected from a probabilistic distribution associated with the respective parameter of the service to be executed, each service associated with transmission of one or more data packets through the network; determine, based on the one or more selected second values, a time sequence representing a volume of data to be injected into the network at each of one or more time intervals; determine, based on the one or more selected first values and the time sequence, a flow of the volume of data through the network; and output information indicative of the flow of the volume of data.

Example embodiments of each of these aspects are set out below.

The means for determining a flow of the volume of data through the network can further comprises: means for configuring a simulation of the network based on the one or more selected first values; means for injecting the time sequence into the configured simulation of the network; and means for determining the flow of the volume of data through the configured simulation of the network.

The means for determining, based on the one or more selected second values, a time sequence to be injected into the network can further comprise means for determining the time sequence based on one or more of: a volume of bits associated with the one or more selected second values, a schedule associated with the one or more selected second values, and a latency associated with the one or more selected second values.

The means for determining, based on the one or more selected first values and the time sequence, a flow of the volume of data through the network can further comprise means for determining the flow of the volume of data based on one or more of: a capacity associated with the one or more selected first values, a buffer size associated with the one or more selected first values, and a discard policy associated with the one or more selected first values.

Optionally, the means for selecting the one or more first values comprises means for automatically selecting the one or more first values. Optionally, the means for selecting the one or more second values comprises means for automatically selecting the one or more second values.

In some implementations, there are further provided means for receiving, based on user input, one or more other first values representing a respective parameter of the configuration of the network, wherein determining the flow of the volume of data through the network is further based on the one or more received other first values.

In some implementations, there are further provided means for receiving, based on user input, one or more other second values representing a respective parameter of the service to be executed on the one or more end devices, wherein determining the time sequence to be injected into the network is further based on the one or more received other second values.

In some implementations, the network comprises: one or more home gateways; one or more home networks; the one or more end devices, the one or more end devices being behind the one or more home gateways and connected to the one or more gateways via the one or more home networks; an access node that provides access to one or more service providers, the one or more service providers configured to provide the service to be executed on the one or more end devices; and an access network connected between the access node and the one or more home gateways.

Optionally, the time sequence is injected into the access node. Optionally, the means for outputting information indicative of the flow of the volume of data comprises means for outputting information indicative of the flow of the volume of data through the access node.

Optionally, the information indicative of the flow of the volume of data comprises one or more of: a volume of transmitted data, a volume of queued data, a volume of discarded data, an indication of quality of service, an indication of service slow down, an indication of service delay, a state of a data queue, or an impact qualification. The information indicative of the flow of the volume data can be provided in upstream and/or downstream directions.

Optionally, parameters of the configuration of the network include one or more of: a type, connection or characteristic of a network node. Optionally, a characteristic of the network node comprises a number of gateways, a number of end devices, a type of an end device, or a network subscription. Additionally or alternatively, a characteristic of the network node comprises a technology of the network node. Optionally, the technology comprises one of: Asymmetric Digital Subscriber Line (ADSL), Very high-speed digital subscriber line (VDSL), GFast, Gigabit Passive Optical Network (GPON), 10-Gigabit passive optical network (XGPON), or 10-Gigabit symmetrical Passive Optical Network (XGSPON).

Optionally, parameters of the service to be executed on the one or more end devices include a number of services per end device. Additionally or alternatively, parameters of the service to be executed on the one or more end devices comprise one or more of: a type, schedule, or characteristic of the service. Optionally, a type of the service can comprise: Audio, Browsing, File Transfer, Gaming, internet of things, internet protocol television, Video Conferencing, voice over internet protocol, or video over the top.

In some implementations, each parameter of the configuration of the network is associated with one or more specific probability (or probabilistic) distributions. In some implementations, each parameter of the service(s) to be executed on the one or more end devices is associated with one or more specific probability (or probabilistic) distributions.

Optionally, each probabilistic distribution is determined based on data measured from real-world networks.

The means for selecting the one or more second values can comprise means for selecting the one or more second values in dependence on the one or more selected first values.

In some implementations, there are further provided means for storing each probabilistic distribution associated with the respective parameter of the configuration of the network and each probabilistic distribution associated with the respective parameter of the service to be executed. In some implementations, there are further provided means for accessing each probabilistic distribution associated with the respective parameter of the configuration of the network and accessing each probabilistic distribution associated with the respective parameter of the service to be executed from a remote storage device.

The means for determining can further comprise: means for injecting the volume of data into the network at each of the one or more intervals; and means for processing the flow of each injected volume of data through the network at each respective time interval to determine the flow of the volume of data.

In some implementations, the network comprises: one or more home (or user) gateways; the one or more end devices, the one or more end devices behind the one or more home (or user) gateways and connected to the one or more home (or user) gateways via one or more home networks; an access node that provides access to one or more service providers, the service provider(s) configured to provide the service(s) to be executed on the one or more end devices; and an access network connected between the access node and the one or more home gateways. The access node may be termed a central node. The access network may be termed an access link.

In some implementations, the means for selecting the one or more first values can comprise means for selecting a plurality of first values. Additionally or alternatively, in some implementations the means for selecting the one or more second values can comprise means for selecting a plurality of second values.

The one or more first values which are selected can instantiate the network configuration. The network configuration can include the network topology and underlying network technology or technologies, and any other network characteristics. The network topology includes the nodes (or elements) within the network and their interconnection. Each node of the network can be associated with network values. The one or more first values can be associated with the network values. The network values can include one or more of: a capacity of the node, a buffer size of the node, and a discard policy for the node.

The one or more second values can be associated with service values. The service values can include one or more of: a schedule for each service, a type (or category) of the service, and a latency or round-trip time for each service. The type / category of the service can condition the pattern of data packets to be transmitted during the service. In some examples, the service values can also include a volume of data to be transmitted. In other examples, the volume of data to be transmitter over time can be determined based on the type, schedule and/or latency of the service (without the need for the volume of data to be defined by the service value).

Also disclosed herein is a system comprising: means for receiving one or more first values, each first value representing a parameter of a network configuration, the network comprising one or more end devices; means for receiving one or more second values, each second value representing a parameter of a service to be executed on the one or more end devices, each service associated with transmission of one or more data packets through the network; means for determining, based on the one or more second values, a time sequence representing a volume of data to be injected into the network at each of one or more time intervals; means for determining, based on the one or more first values and the time sequence, a flow of the volume of data through the network; and means for outputting information indicative of the flow of the volume of data.

Optionally, the system further comprises means for selecting each first value from a probabilistic distribution associated with the parameter of the network configuration. Optionally, the system further comprises means for selecting each second value from a probabilistic distribution associated with the parameter of the service. In some examples, the selected values may be received from a local storage or a remote storage. In some examples, the selected values may be received in response to user input or user selection. The user input or user selection can be input/selection of a seed value for automatically instantiating the digital twin.

Also disclosed herein is a system comprising: means for selecting a plurality of first values, each first value selected from a respective probabilistic distribution and representing a respective parameter of a network configuration, the network comprising one or more end devices; means for selecting a plurality of second values, each second value selected from a respective probabilistic distribution and representing a respective parameter of a service to be executed on the one or more end devices, each service associated with transmission of one or more data packets through the network; means for determining, based on the plurality of second values, a time sequence representing a volume of data to be injected into the network at each of one or more time intervals; means for determining, based on the plurality of first values and the time sequence, a flow of the volume of data through the network; and means for outputting information indicative of the flow of the volume of data.

### Brief Description of Drawings

Example embodiments will now be described, by way of non-limiting example, with reference to the accompanying drawings, in which:
FIG. 1 (a) is a schematic diagram of an example network to be implemented within a digital twin, and FIG. 1 (b) is a schematic diagram of a pipe level representation of the network of FIG. 1 (a);
FIG. 2 (a) is a first example probabilistic distribution, and FIG. 2 (b) is a second example probabilistic distribution;
FIG. 3 (a) is a schematic representation of an example operation of a system implementing a digital twin, FIG. 3 (b) is a schematic representation of an example pipe level operation of the digital twin, FIG. 3 (c) is a schematic representation of another example pipe level operation of the digital twin, and FIG. 3 (d) is a schematic block diagram of an example system implementing a digital twin, such as that of FIG. 3 (a);
FIG. 4 (a) shows example output of downstream traffic from a system implementing a digital twin, the output at a first granularity, and FIG. 4 (b) shows example output of upstream traffic from the system at the first granularity;
FIG. 5 (a) shows example output of downstream traffic from a system implementing a digital twin, the output at a second granularity (finer than the first granularity), and
FIG. 5 (b) shows example output of upstream traffic from the system at the first granularity;
FIG. 6 (a) shows a schematic representation of an example network replicated within a digital twin, and FIGs. 6 (b) to 6 (e) show example output from the digital twin;
FIG. 7 (a) shows a schematic representation of another example network replicated within a digital twin, and FIGs. 7 (b) to 7 (d) show example output from the digital twin;
FIG. 8 is an example flow diagram showing processing operations according to some examples of implementing a digital twin of a network;
FIG. 9 is a schematic view of an apparatus which may be configured according to one or more example implementations of the process described herein; and
FIG. 10 is a plan view of non-transitory media.

In the description and drawings, like reference numerals refer to like elements throughout.

### Detailed description

There exist simulators for use in simulating the traffic response of a network given topology characteristics of the network (and/or associated pipe capacity). These simulators are based on, for instance, data exchange mechanisms. However, the present inventors have recognized that, when trying to provide a digital twin of a network to facilitate assessment of the capacity and/or bandwidth requirements (and/or optionally to find an optimal configuration for the network), it is not enough to simply simulate the exchange of packets in a pipe of an access network. Instead, the influence of different network equipment behaviour and mechanisms, the provisioning of services, the presence and behaviours of devices on home/end networks and users' interactions with these devices, capacity sharing between users, technological protocols, etc. also needs to be taken into account.

The digital twin described herein looks to replicate the characteristics of a network as a whole, and thereby replicate or produce data that is as close to the expected response of a real network as possible. In particular, the digital twin looks to replicate in a digital world the different technologies, mediums, protocols, home/end devices, and users' habits regarding use of these devices, in order to realistically represent real word network behaviours. The resulting digital twin can be used to assess different network configurations and scenarios, perform testing of the network, and generate realistic data sets (which can be used for e.g. training a machine learning model).

In particular, the approach described herein allows to reproduce real network situations by generating a multitude of simulations, each representing a different network scenario, to obtain a variety of different situations that mimic conditions that can be encountered on a real network. The approach can also be used to implement a single simulation of a specific network scenario. These outcomes can be achieved without a user having to define how the traffic is generated on one side of the network and consumed on the other side, and without having to specify the linkage or connection between different network elements. In this way, networks can be replicated or simulated without a user having to input the individual technological and technical aspects of the network. Improved replicas of a real-world network can therefore be provided using a digital twin in a simple and efficient manner.

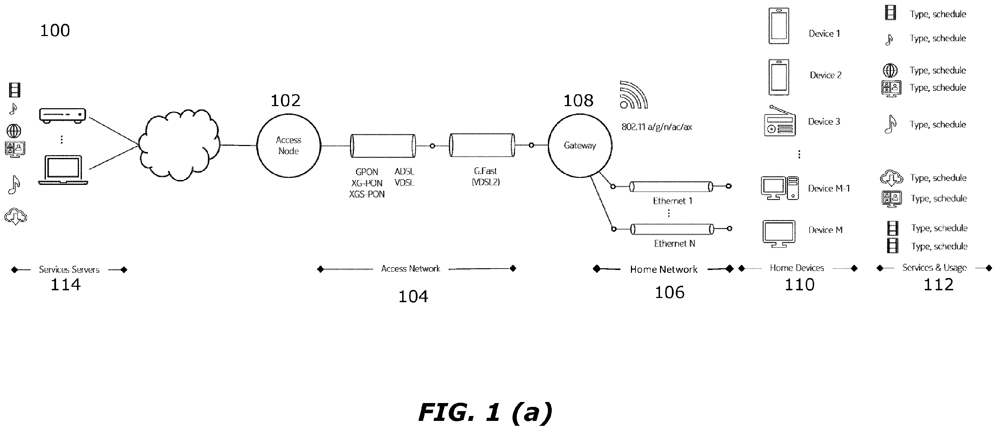

With reference to FIG. 1 (a), a network digital twin of the access and home network is described, which can replicate in a digital world the access network technology behaviors (such as e.g. the access node or optical line terminal (OLT), the optical network terminal (ONT), etc.), the home environment (including home/user gateways, home/end network protocols and the presence and behaviors of devices connected to the home or end network), and the interactions of different users with the network 100. These elements can also be implemented at various scales to mimic the response of a real-world access network.

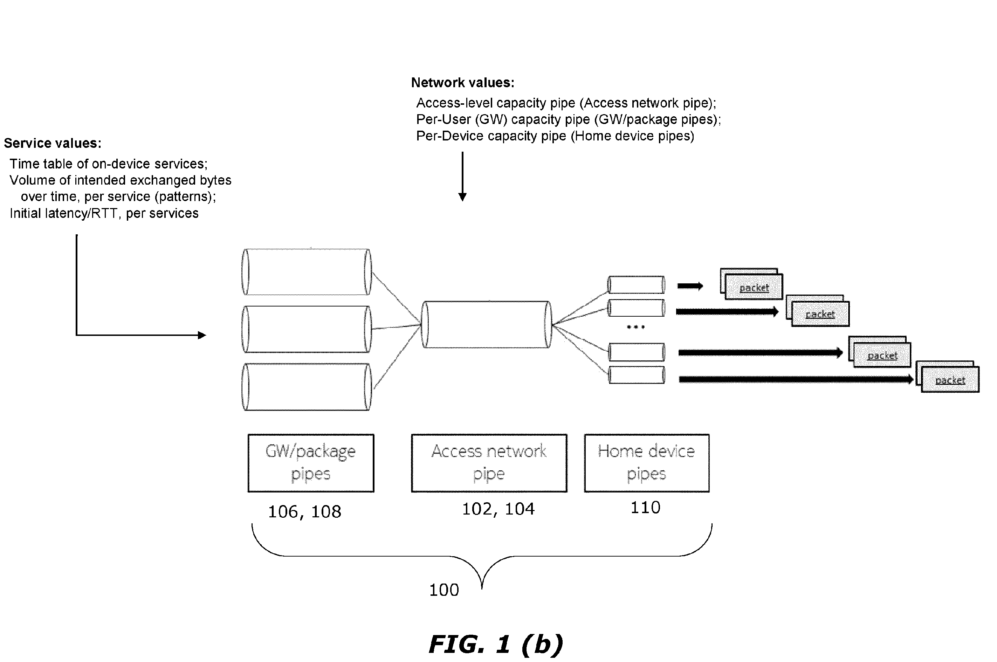

As shown in FIG. 1 (a), the network 100 comprises an access node 102, an access network 104, one or more home or user gateways 108, one or more end or (home) networks 106 (which can be represented by the end user profile registered on the access node 102, as shown in FIG. 1(b) for example) and one or more end devices 110. The home gateway(s) 108 connect the home network(s) to the access network 104. The home network(s) 106 connect the end device(s) 110 within a home to a respective home gateway 108. The access node 102 may also be termed a central node in the art. The access network 104 may also be termed an access link in the art.

Multiple different access network technologies can be replicated, including but not limited to: Asymmetric Digital Subscriber Line (ADSL), Very high-speed digital subscriber line (VDSL), GFast (a digital subscriber line protocol standard), Gigabit Passive Optical Network (GPON), 10-Gigabit passive optical network (or XGPON), and 10-Gigabit symmetrical Passive Optical Network (XGSPON). Any suitable gateway technologies can be replicated. Appropriate access nodes can be replicated for a given access network technology.

As shown in FIG. 1 (a), each home network 106 is connected to a home or user gateway 108, where the gateway acts to connect to the home network to the access network 104. In some examples, the individual home network technologies and protocols can be replicated, including wireless connections and ethernet connections. Various network subscriptions for each home network (e.g. bandwidth, upload and/or download speeds) can also be replicated, along with a user profile or service level agreement (SLA) for each home network 106. In other examples, such as in the case of a shared access network like PON technology, the home network is not replicated; instead, the behaviour of end devices 110 behind each of one or more gateways will be replicated without reference to the home network behaviour.

As shown in FIG. 1 (a), there are one or more end devices 110 (home devices, device 1 ... device M) connected to the end (or home) network 106 (i.e. one or more end devices are located behind the one or more home/user gateways 108). These end devices 110-1 to 110-M can include any suitable home user equipment, including but not limited to: a desktop, a laptop, a tablet or pad device, digital enhanced cordless telecommunications (DECT) devices (such as landline phones), smartphones, internet of things (IoT) sensors or devices, a tuner or set top box, a television (TV).

The network configuration can include the network topology and underlying network technology or technologies, and any other network characteristics. The network topology includes the nodes (or elements) within the network and their interconnection. In order to replicate the network configuration in a digital twin, the various elements of the network have to be digitally replicated. The access network 104 is associated with an access network 104 technology (GPON, XGPON, etc.). The access network technology defines a transmission capacity for the network (bitrate, throughput, etc.). The access network 104 connects to the access node 102 through an interface aligned with (or adapted for) the network access technology. The access node 102 implements the buffers and discard policies for the access network 104.

The access network 104 and access node 102 are replicated digitally in terms of one or more of: a defined/assigned capacity, a buffer size, and a discard policy, as discussed below in more detail with reference to FIG. 1 (b). At the access node 102, service level agreement (SLA) dependent mechanisms, as well as technology dependent mechanisms, have been implemented to match how the network 100 provides/shares capacity on a multi-user link. In a similar way, the end or home network 106, the defined/assigned capacity via interfaces of the home gateways 108 (WiFi 802.11 a/g/n/ac/ax/... or Ethernet 10/100/1000/..., etc.) can also be replicated digitally within the capacity chain.

All these network elements together define a capacity chain, for each user as well as for the total shared capacity of the network. Besides the capacity, the network is also defined by the devices 110 involved, for a given communication chain (e.g., a given internet subscription). The bandwidth requirements and responses of various devices have been considered and digitally replicated, as discussed below in more detail.

In order to determine the capacity of the nodes/elements of the network 100, and the buffer size and the discard policy for each node, a network configuration is first selected. Values are selected which can instantiate the network configuration. Each value represents a value for a respective parameter of a configuration of the network. The network as a whole can thus be defined by one or more parameters, the parameters representing different aspects of the configuration of the network 100 which is to be replicated. The configuration of the network can include the network topology, the network technology or technologies, and any other configuration parameters that represent the physical network and its implementation. The combination of capacity, buffer size and discard policy for each node of the network 100 is called herein the capacity chain.

The access network technology is an example of a parameter of a configuration of the network 100 which is to be replicated by the digital twin. Parameters of the configuration of the network can also include one or more of a type, connection, or characteristic of any network node. Examples of the characteristics of each network node include: a capacity, a queue size, and a technology type. Other examples of parameters of the configuration of the network which is to be replicated by the digital twin include, but are not limited to: the number of gateways, the number of end devices, the type of end devices, the number of local area network (LAN) ports, the type of network subscription for a home network, etc. Any suitable parameters for representing the configuration of the network (and therefore the physical and technological network characteristics) can be used.

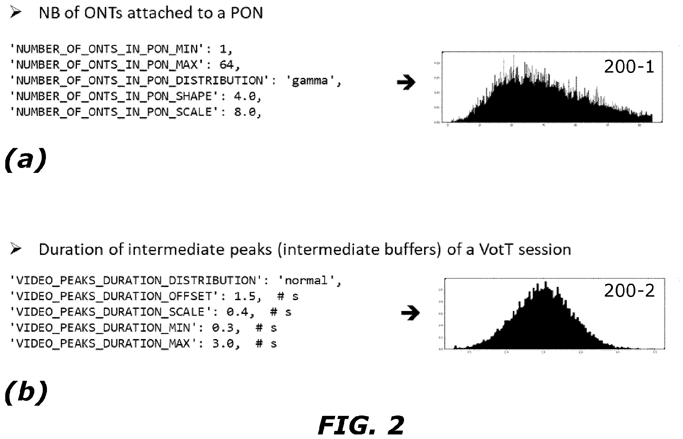

The values are selected from respective probability distributions. Each parameter of the configuration of the network can be associated with one or more specific probability (or probabilistic) distributions. The determination or selection of probabilistic values for these various parameters for providing a digital twin as described herein is discussed below in more detail with reference to FIGs. 2 (a), (b).

Once the values of the parameters are selected from these distributions, a capacity associated with the one or more selected values, a buffer size associated with the one or more selected values, and/or a discard policy associated with the one or more selected values can be used to generate or define behaviour of the digital twin, as described below in more detail with reference to FIG. 1 (b).

One or more services 112 can be run on the end devices, and each service can be associated with a type of service and a service schedule. The type of service (or service type) can include one or more of: Audio, Browsing, File Transfer, Gaming, Internet of Things (IoT), internet protocol television (IPTV, also called TV over broadband), Video Conferencing, voice over internet protocol (VoIP), video over the top (VotT, also called over the top content or OTT content), and/or iperf (a network performance measurement tool which can create data streams to measure throughput between two ends in one or both directions) for transmission control protocol (TCP) or user datagram protocol (UDP), or for other protocols built on top of TCP or UDP (like specific and sometimes proprietary protocols implemented by VotT providers) - the approach described herein can embed traffic patterns and behaviours specific to any of these protocols. These services can be provided by the services servers 114 on the other side of the access network 104 from the home network 106. Scheduling can also be associated with each service, along with transfer volumes of data up/down.

In order to replicate the behaviour of the network 100 in a digital twin, services are defined and implemented in terms of requirements they need and associated traffic patterns requirements they may generate when running on the end devices 110. In particular, each service can be associated with one or more of: a volume of bits (at each interval of time), a schedule, and a latency or round-trip time.

For instance, the File Transfer service (download) may be defined in terms of a volume of bytes to exchange (dominantly in downstream) and by trying to match the maximum available bandwidth until the end of the service (once the whole file is downloaded). By contrast, a Video-Over-The-Top service (e.g., Netflix), requires the transfer of buffered bytes at maximum available bandwidth at the initialization of the service, but then exchanges rebuffering data at regular intervals afterwards. All of these mechanisms are affected by the network capacity chain, but also by the limits imposed by the home network 106, the network interfaces and the devices 110 on which each service 112 is launched. The service servers 114 and traffic regulation mechanisms (e.g., enhanced capability port (ECP) mechanisms, PON aggregation mechanisms, etc.) also affect the defined/assigned capacity of the network 100.

In order to determine the volume of bits, schedule and/or latency of each service, a number of services 112 which are to be run on the end devices 110 can first be selected. The services 112 as a whole can be defined by one or more parameters.

The service type is one example of a parameters of the services which are to be run on the end devices. Other examples of parameters of the services which are to be run on the end devices include, but are not limited to: a number of services per end device, a schedule of the service and a characteristic of the service. A characteristic of the service can include one or more of: a bit rate, a data volume to transfer, buffering policies, quality of service (QoS) requirements, quality of experience (QoE) requirements, a service level agreement (SLA), or user interactions with the service. Any suitable parameters for representing the services on the end device (and therefore the expected data traffic over the network) can be used.

The values are selected from respective probability distributions. Each parameter of the service(s) to be executed on the one or more end devices can be associated with one or more specific probability (or probabilistic) distributions. The determination or selection of probabilistic values for these various service parameters is discussed below in more detail with reference to FIGs. 2 (a), (b). Once the values of the parameters are selected from these distributions, a volume of bits associated with the one or more selected values, a schedule associated with the one or more selected values, and/or a latency associated with the one or more selected values can be used to generate or define the services (including the associated service requirements and associated traffic patterns requirements), and therefore the behaviour of the digital twin, as described below in more detail with reference to FIG. 1 (b).

FIG. 1 (b) shows the network 100 represented by a plurality of communication pipes (or comPipes). Communication pipes are resources that allow the production and consumption of objects, and which allow to handle shared resources availability. There are three levels of pipes:
1. GW/Package pipes, which are pipes corresponding to an end user profile (or SLA), and which also correspond to the bandwidth committed to the home gateway owned by that end user (e.g., representing the gateway 108 and the pipes of the home network 106 which connect the gateway to the end devices). These pipes are "per user" pipes.
2. An access network pipe corresponding to the access network or access link 104 and access node 102. This pipe is a network level pipe and is shared by multiple users.
3. Home device pipes corresponding to each of the devices 110 connected to the home network 106 (e.g., pipes corresponding to end devices 110). These pipes are "per device" pipes.

The communication pipes are each characterized by one or more of: a capacity to transmit a given volume of bits per sampling interval or iteration (the capacity is a configurable parameter, which is configured based on the values selected for the parameters of the network configuration); a buffer (or queue) of a given size (the queue size is a configurable parameter, which is configured based on the values selected for the parameters of the network configuration); and/or a discard policy.

Based on the selected values for the parameters representing the network configuration, a capacity, buffer size and/or discard policy can be defined for each node/element in the network, thereby defining a capacity chain for a given network 100. The discard from a node results from the quantity of traffic to be processed by a network element which does not fit within the transmission capacity plus the buffer size. The discard can also include the volume of data not transmitted due to a lack of capacity along the chain. The discard policy defines options for rejecting or retransmitting this unprocessed traffic. A discard bucket is an implementation concept for storing the data traffic/date volume to be retransmitted and for counting the volumes of data to be ultimately discarded. As shown in FIG. 1 (b), this overall capacity chain (capacity, buffer size, discard policy) can be termed herein "network values".

The network values are the outputs from the configuration or instantiation of the network 100 (where the selected parameter values are the inputs to the configuration of the network 100). In this way, the parameter values selected from the probabilistic distributions define the network topology, including the choice of nodes and their interconnections, and the technology used for the network. The network values associated with these parameter values define the resulting capacity of a network comprising the nodes/technologies instantiated using the parameter values selected from the probabilistic distributions. The network values are also inputs to subsequent operations of the digital twin.

The objects which are produced and consumed by the communication pipes are packets of bits constituting the sequences of bits due to the multiple services 112 executing on the end devices 110, where one packet represents a certain volume of bits of a given service at a certain iteration or time interval. Said another way, every service traffic sequence is segmented into packets of bits, one packet of a (possibly different) volume of bits per sampling time interval or iteration. These packets can be characterized by: a size, or traffic volume; optionally, a service priority; and/or a device ID that links a service 112 to a specific device 110 connected to a specific home gateway 108. In some examples, the system implements a mechanism of service priorities, like on real IP networks. Data packets for service(s) of higher priority are processed before those of lower priority service(s). For a same priority, the system can implement a mechanism of fair queuing round robin, or the like. The priority can be another example of a parameter representing the services.

Based on the selected values for the parameters representing the services, a volume of bits, a schedule (or timetable), and/or a latency or round-trip time can be defined for each service (as well as optionally a service priority). By collating all the services, the system described herein can determine or define a traffic schedule for each service. As shown in FIG. 1(b), this traffic schedule (a volume of bits, a schedule, latency) can be termed herein "service values". The service values are the outputs from the determination of which services are running on the devices (where the selected parameter values are the inputs to the determination of which services 112 are running on the devices 110). The service values are also inputs to subsequent operations of the digital twin.

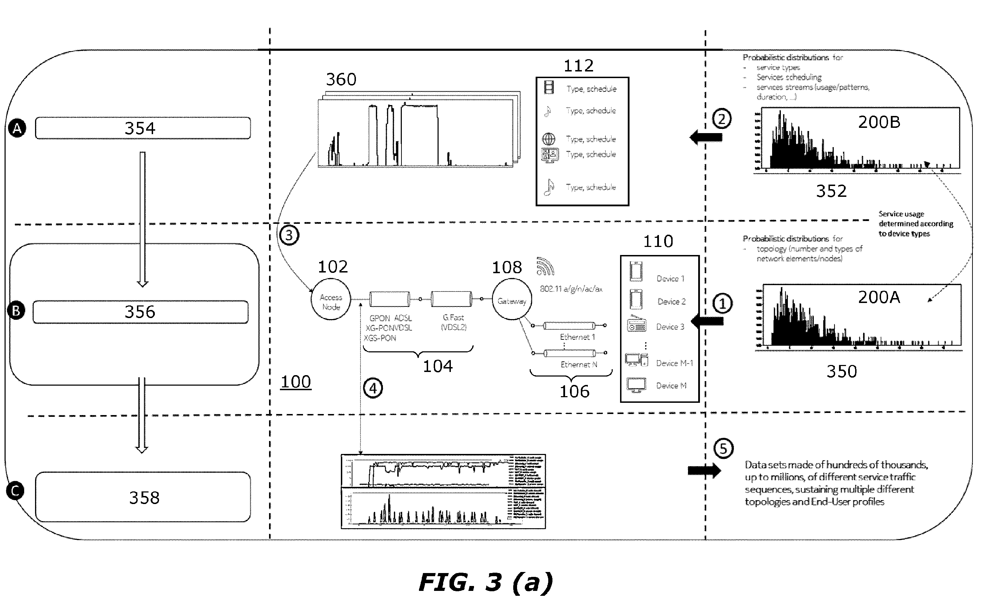

In particular, the service values can be used to determine a time sequence representing a volume of data to be injected into the network at each of one or more time intervals during operation of the digital twin, as discussed below in more detail with reference to FIG. 3 (a). The time sequence can represent the total or aggregated volume (in bytes) of data to be transmitted during execution of the services 112, and allows a way of representing the flow of data without needing to replicate the additional structured information of the individual packets themselves (e.g. the header information). The sequence can represent the volume of data at any suitable time interval, where the time interval can be dependent on the granularity of the simulation.

The network values, along with the time sequence, can then be used to determine a volume flow of data through the network 100 (represented by the packets on the right hand side of FIG. 1 (b), where the packets are associated with each home or end device pipe), as discussed below in more detail with reference to FIG. 3 (a). This volume flow of data through the communication pipes of the network 100 replicates, within the digital twin, the real-world behaviour of packets over the network 100.

Although the network behaviour can ultimately be defined in terms of the capacity chain and traffic schedule (i.e. by the network values and service values shown in FIG. 1 (b) and discussed above), accurately determining these network and service values such that the network 100 can be replicated in a digital twin can be challenging. This is because every user can behave differently in terms of their connection usage, time spent at home, habits as regards using services 112 on end devices 110, etc. Moreover, in terms of network configuration, not every home environment includes the same amount and/or types of devices 110; not every gateway 108 exhibits the same interfaces; not every access node 102 has the same users or user provisions, etc. Furthermore, in terms of the use of services 112, every service can have different patterns of data usage and different bit rates, requiring different data transfers from the servers 114.

In order to replicate these various degrees of freedom, statistical or probabilistic distributions 200 are determined for each of the parameters of the configuration of the network 100 which is to be replicated and for each of the parameters representing the services 112 to be executed on the end devices 110. Each probabilistic distribution can be determined based on measured, real-world data, in order that the distributions fit the real-world behaviour of a network 100. The probabilistic distributions can be parametrized to fit the respective real-world characteristics of different network configurations (topology, technology, etc.) and service usages. An example of these probabilistic distributions is shown in FIGs. 2 (a), (b). The distributions provide a statistical representation of the possible values for each parameters, where the values for each parameter can be selected in accordance with the probability. The selected values for each parameter are then used for determining the network values and service values, as discussed above.

FIG. 2 (a) provides an example distribution 200-1 for a parameter representing the number of optical network terminals (ONTs) within a given realization of a passive optical network (PON) access network 104. The distribution is a gamma distribution parameterized to fit the measured data. The distribution shown in this example is the distribution used by the system when it has previously been determined that the network distribution was GPON. The network technology is itself determined based on its own distribution; in this example, the network technology has a normal distribution set to 80% GPON, 15% XGPON, 5% XGSPON.

FIG. 2 (b) provides another example distribution 200-2 for a parameter representing the duration of intermediate peaks of a Video-over-the-Top service type for services 112. The distribution is a gamma distribution parameterized to fit the measured data.

It will be understood that these distributions are merely examples to illustrate the underlying principles described herein. The probability distribustions used by the system can be subject to adaptation and modification over time, allowing the digital twin to evolve. By adjusting the probabiltiy distributions, accuracy with respect to real data can be improved, allowing the digital twin to reflect changing real world conditions.

A probabilistic distribution 200 can be determined for each parameter that is to be represented within the digital twin. Thus, a plurality of distributions 200-1 ... 200-N can be determined and stored for use when running the digital twin of the network 100. The distributions 200 can be stored at/as part of the digital twin, and/or can be otherwise accessed by the digital twin (for example from a remote storage device, such as a cloud server). When instantiating or configuring a scenario of the digital twin, or a multitude of scenarios at once (i.e. a traffic generation campaign), a specific value can be selected for each of the respective parameters in accordance with the respective probability distribution for that parameter. These distributions can eliminate the need for a user of the digital twin to have expertise on a specific network technology type or knowledge of end user behaviour, for example. Instead, multiple different types of networks and user/service behaviours can be replicated or simulated in a probabilistic way.

It will be understood that the probability distributions can be independent from one another, or at least some distributions can be dependent on the selection of certain values for given parameters. For example, the distribution shown in FIG. 2 (b) can be dependent on the service type being video-over-the-top (VOTT); in response to selecting a value for a service type parameter indicating the service type is VOTT, the distribution for the intermediate peaks shown in FIG. 2 (b) may be used to select a parameter for the duration of intermediate peaks. However, if a different service type parameter is selected, e.g. VOIP, a different distribution will be used for selecting subsequent parameters.

This statistical approach allows to replicate behaviours and activities of end-users, meaning that realistic home environment and realistic home schedules for various types of users are digitally available. For example, for an IPTV subscriber, a home environment can be set which contains devices including TVs, but also for instance laptops and smartphones. In contrast, for non-IPTV subscribers, TV's may get instantiated with higher probability than Video-over-the-Top Services. These are random processes generated with statistical guidance to match the distributions and responses of a real network (as determined by measurement of real world networks).

The use of these probabilistic distributions 200 in initialising or configuring the digital twin will now be discussed with reference to FIG. 3 (a).

With reference to FIG. 3 (a), a system for implementing a digital twin of a network is described. As described herein, the system implementing the digital twin is able to execute both specific and macroscopic network scenarios (i.e. simulate the network at a single-user level up to at the entire network level), is able to generate on-demand data (including large data sets containing a variety of network scenarios and/or labelled data sets useful for machine learning model training), and is able to match real-world network conditions. The system is also coherent, meaning that all its components, input data and intermediate data (data generated by the components during operation of the digital twin) interact in a logical/consistent way such that the produced output mimics what may happen in the real-world network. The digital twin can be used to output information indicative of the flow of packets through the network (such as e.g., network traffic patterns).

The system comprises means 350 for selecting one or more first values. Each first value represents a respective parameter of a configuration of the network and is selected from a probabilistic distribution 200A associated with the respective parameter of the configuration of the network. The system further comprises means 352 for selecting one or more second values. Each second value represents a respective parameter of a service 112 to be executed on the one or more end devices 110 and is selected from a probabilistic distribution 200B associated with the respective parameter of the service to be executed.

The probability distributions 200B can be dependent on the number and type of devices 110 represented by the first value(s) selected by means 352 from probability distributions 200A. In other words, selecting the one or more second values is dependent on the one or more selected first values. In this regard, selecting the first values is shown to occur as part of Step 1, and selecting the second values is shown to occur as part of Step 2. This dependency is due in part to the above-discussed effect of network capacity on the service requirements and traffic patterns.

In more detail, at Step 1 the means 350 of the system selects first values for use in determining or configuring the network's configuration. These parameters can include, as discussed above, the number and types of network elements/nodes and their characteristics (pipe capacity, queue/buffer size), end-users' profiles and their related characteristics (committed capacity or SLA, individual buffer size), etc. Any suitable parameters can be included. The one or more first values which are selected can instantiate the network configuration, and are associated with network values. At Step 2, the means 352 selects second values for use in determining or configuring the service scheduling, i.e., what services 112 will be executed on what devices 110, when the services start and stop, etc. The one or more second values are associated with service values. Any suitable parameters can be included. The second values for the service scheduling are selected according to the number and type of devices 110 being part of the configuration (as selected or defined at Step 1). Steps 1 and 2 include selecting values for each parameter from the dedicated probabilistic distributions 200 for that parameter, as discussed above with reference to FIGs. 2 (a), (b).

In some implementations, the selection of the values at Steps 1 and 2 (by means 350, 352) is fully automated. For example, the means 350 for selecting the one or more first values comprises means 350 for automatically selecting the one or more first values. Additionally or alternatively, the means 352 for selecting the one or more second values comprises means 352 for automatically selecting the one or more second values.

In some implementations, the means for selecting the one or more first values comprises means for selecting a plurality of first values. Additionally or alternatively, the means for selecting the one or more second values comprises means for selecting a plurality of second values. Optionally, where the selection is fully automated, the plurality of first and/or second values may be automatically selected in accordance with the probability distributions 200.

This automatic selection can be considered as a standalone mode of the digital twin, where the response of the full network can be replicated as all characteristics of the network are captured (access, home, devices, services, and user behaviour) in the digital twin. In some specific implementations of the standalone mode, the automatic selection is done based on a seed value which can be passed to the system implementing the digital twin, leaving the system to automatically take all the decisions with regard to network configuration, activities scheduling and traffic sequences generation based on that seed value. The seed value can be provided as part of, or in response to, a user input. In particular, the system can select the first and second values at random (though in accordance with and limited by the respective probability distributions 200 associated with the various dynamic parameters of the system) to initialize the network. This is a probabilistic or statistical approach, where a different seed will lead to a completely different (but still realistic) final output.

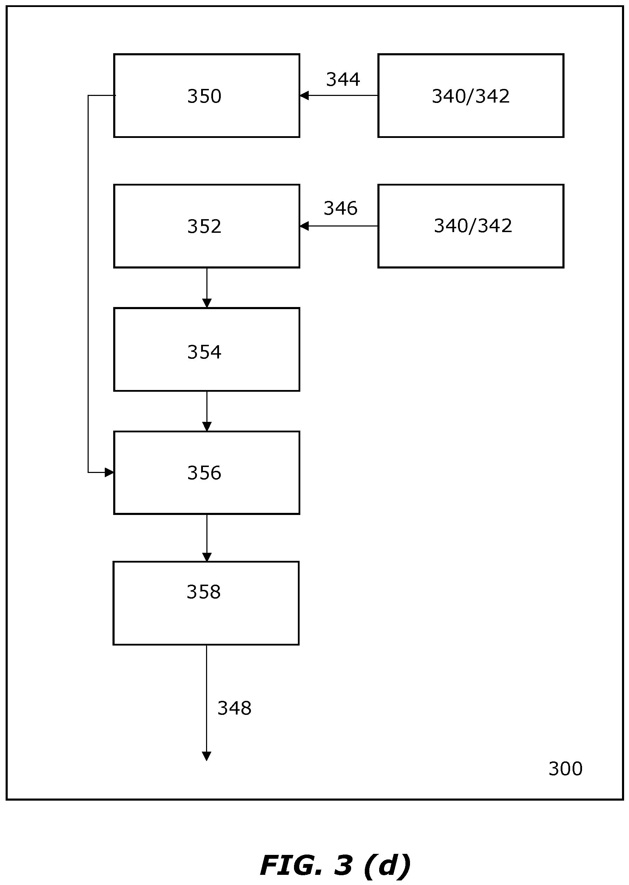

To facilitate this selection, the system may further comprise means 340 for storing each probabilistic distribution 200A associated with the respective parameter of the configuration of the network and each probabilistic distribution 200B associated with the respective parameter of the service to be executed (see FIG. 3 (d), discussed below). In other words, the probability distributions 200 may be stored locally as part of the system implementing the digital twin. Additionally or alternative, the system may further comprise means for accessing each probabilistic distribution 200A associated with the respective parameter of the configuration of the network and each probabilistic distribution 200B associated with the respective parameter of the service to be executed; the probability distributions 200 can be stored remote from the system implementing the digital twin, for example at a remote storage device. The selecting may therefore include receiving one or more (or a plurality of) selected values from said remote storage. This selecting and subsequent receiving from the remote storage device can be automatic, as discussed above.

In some examples, at least some of the first and second values are received in response to user input. The user input may comprise a seed value, as discussed above. However, in other examples, a user may configure or enforce one or more parameters or settings of the digital twin by providing specific first and/or second values for certain parameters. Other of the first and second values can be automatically selected, as discussed above. For example, the user may configure a subset of parameters, and values for the remainder of the parameters may then be automatically selected at least in part based on the user configuration of the subset (e.g. as a result of the aforementioned dependency of certain probability distributions on the values of parameters). The user can thus provide their own settings for one or more aspects of the network configuration and/or activities scheduling by providing user input of values for one or more parameters.

This can be considered as an on-demand mode of the digital twin, where the response of the full network as initialised by the user's input values for certain parameters can be determined. Where these other values are received, the system can bypass the selection of one or more first and/or second values (i.e. values will not be selected for parameters that have been specified by a user).

The system further comprises means 354 for determining, based on the one or more selected second values, a time sequence 360 representing a volume of data to be injected into the network at each of one or more time intervals. The time sequence thus represents a volume of data per unit time (where the unit time can be selected based on a granularity of the simulation). Optionally, where the user provides one or more second values to be used alongside the automatically selected second value(s), determining the time sequence 360 is further based on these other, provided, second values.

In order to determine a time sequence 360, the means 354 uses the second values selected at Step 2 and determines the service scheduling, i.e., what services will be executed on what devices, when they start and stop, etc. In particular, the means 354 can determine the service values using the second values, where the service values include one or more of: a volume of bits associated with the one or more selected second values, a schedule associated with the one or more selected second values, and a latency associated with the one or more selected second values. These service values can be used to schedule the services.

Once the services are scheduled, the means 354 can define the traffic per activity using the service values, i.e., define the upstream and downstream data flows or data volumes, where these data flows/volumes are made up of the packets of bits to be submitted to the network at every sampling interval. In other words, using the service values, means 354 collates all the different packets for each of the services 112 to be run on the devices 100 of the network 100 and determines the total number of packets of bits through the network at each time interval. Once the packets are collated/aggregated, a total volume of data (in bytes) to be injected into the network at each time interval can be determined; this is the time sequence 360. The time sequence 360 can therefore be considered as a traffic sequence of the total amount of data to be input into the network per unit time, representing the overall volume of data without the need to replicate packet specific information (such as the structured information of the data packets or other content of the packet). The time sequence can be determined based on one or more of: a volume of bits associated with the one or more selected second values, a schedule associated with the one or more selected second values, and a latency associated with the one or more selected second values.

When creating these traffic sequences, the system considers the type and characteristics of every service 112 to generate sequences of traffic including patterns and effects specific to that service type. These characteristics can include the realistic range of nominal bitrate, how the total volume to transmit is distributed over the duration of the service 112, initial and intermediate buffers, quality control, buffering policies, intermediate peaks, possible end-user interactions (pauses, screen sharing, video on/off, etc.), etc. In this way, the means 354 of the system implementing the digital twin controls the management of services and traffic usage, including the determination of service 112 scheduling and mimicking the decisions of end users (human beings and/or device 110) when executing the services 112. The means 354 also controls the generation of the traffic sequences, the sequences corresponding to the type of services 112 (File Transfer, VOTT, Video Conferencing, etc.), their scheduling, and the characteristics of the service type.

The system further comprises means 356 for determining, based on the one or more selected first values and the time sequence 360, a flow of the volume of data through the network 100 (e.g. a volume flow of data). Optionally, where the user provides one or more first values to be used alongside the automatically selected first value(s), determining the flow of the volume of data through the network is further based on these other, provided, first values. In particular, the means 356 can determine the network values using the first values, where the network values include one or more of: a capacity associated with the one or more selected first values, a buffer size associated with the one or more selected first values, and a discard policy associated with the one or more selected first values. In other words, each of the network nodes and connections, and network technology, instantiated using the selected first values have associated network values (capacity of the node, buffer size for the node, discard policy for the node). The network values can then be used, along with the time sequence 360 of data packets, to determine a flow of the volume of data through the entire network 100 by defining an overall capacity chain.

In some examples, the means 356 for determining a flow of the volume of data through the network 100 comprises means for configuring a simulation of the network based on the one or more selected first values. In some examples, means for configuring a simulation of the network based on the one or more selected first values further comprises means for configuring a simulation of the network based on the network values associated with the selected first value(s). In this way, the digital twin of the network is configured based on the parameters representative of the network configu ration.

As part of this configuration, means 356 uses the first values selected at Step 1 and determines the configuration of the network 100 as represented by the network values: number and types of network elements/nodes and their characteristics (pipe capacity, queue/buffer size), end-user profiles and their related characteristics (committed capacity or SLA, individual buffer size), etc. In other words, the means 356 controls the configuration and management of the network 100, including determining the network configuration through the generation, interconnection and sizing of the multiple nodes of the network 100 and their main characteristics (capacities, buffer sizes, etc.) in accordance with the network values associated with the selected first values.

The means 356 can further comprise means for injecting the time sequence 360 of data packets into the configured simulation of the network. In this example, the time sequence 360 of data packets are configured to be injected into the access node 102 (shown at Step 3). The means 356 further comprises means for determining the flow of the volume of data through the configured simulation of the network. Once the services 112 are scheduled and the traffic sequences defined as a time sequence 360 of data packets, the means 356 can submit to the access node 102 of the simulated network 100, a data volume representing the packets of bits of every service or activity sequence, based on their scheduling. The packets are injected at sampling intervals, based on the time sequence 360. The means 356 determines the flow of this injected data by managing the transmission of the volume of data through all the successive nodes and pipes constituting the network, taking into account the mix of services 112 at every sampling interval and temporally evolving conditions (such as service prioritization, congestion at one or several nodes, queueing delays, and policies or protocols which mean that entire or partial packets of data are delayed, discarded, or retransmitted). In this way, the overall flow of packets is simulated or replicated without needing to model the behaviour of individual packets.

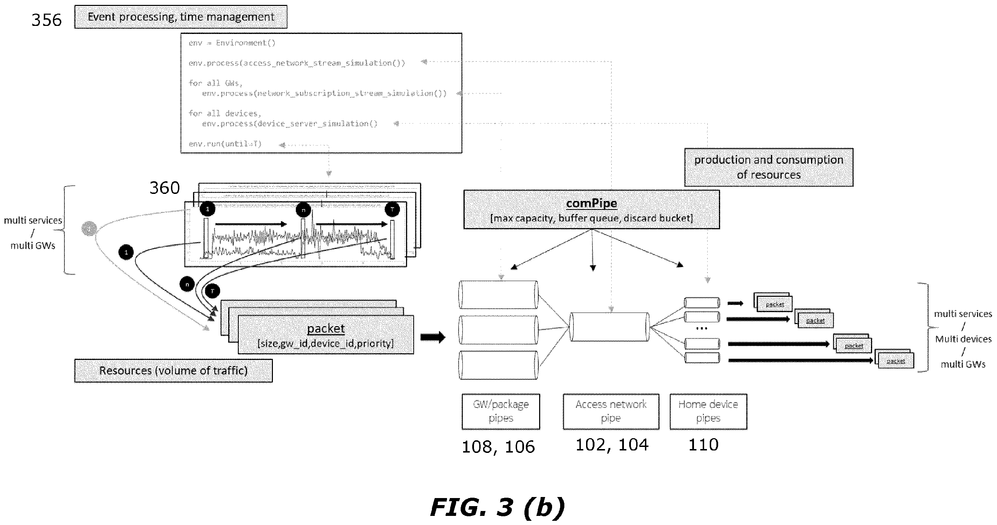

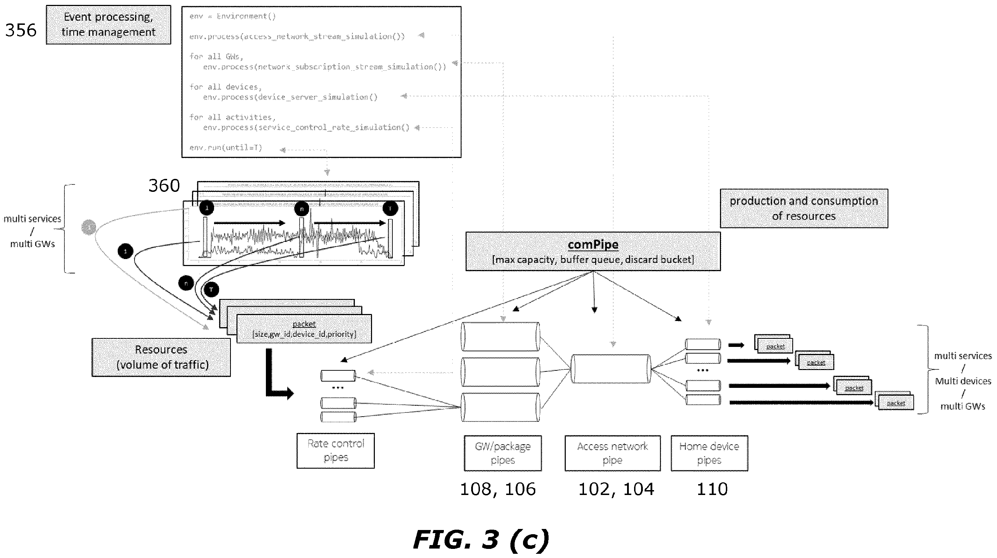

Examples of this injection and flow of the data through the network are discussed further with reference to FIGs. 3 (b) and (c).

FIG. 3 (b) shows the communication pipes of FIG. 1(b), along with the time sequence 360 of data packets (determined as discussed above). At every sampling interval n (from 1 to T, where T is the duration time of the simulation or test scenario), an aggregated volume of data, representing the data of all the packets of every service that is scheduled at that iteration, is submitted to a communication pipe. In this example, the time sequence is submitted to the pipe corresponding to the home gateway 108 behind which the service 112 is run. The pipe corresponding to a home (thus an end user) collects the aggregation of all the data from all the services running on the home network and end devices behind that home gateway 108. The pipe corresponding to the access link 104 collects the aggregation of all the data of all the services 112 of all the end user devices 110 connected on that link, after any possible discard at the previous pipe level. When the data flow reaches the access link 104, the time sequence 360 is injected to the access node 102. In some examples, it can be the measurement of the volume flow of data out of the access node that is output by the digital twin (e.g. a measurement or counter of the volume of traffic transmitted or discarded, downstream and/or upstream, at the access node 102). In other examples, the output (representing a measurement or counter of the volume of traffic) can be taken at any suitable point on the network.

If, at a given iteration (i.e. time interval), the aggregated volume of data that enters a given pipe is above its capacity (as defined by the network values), the excess volume of data goes into the corresponding queue or buffer (as defined by the network values) and will be processed (i.e. re-injected to the entry of that pipe) at the next iteration. If the queue is full, the remaining volume of data goes into the corresponding discard bucket (as defined by the network values) and is definitely lost. In this way, the capacity chain defined by the network values defines the volume flow of data (which is injected in accordance with the input time sequence 360) between pipes. In other words, the transmission, queuing and discard of data packets can be replicated in the volumes of data without needing to model the behaviour of each packet individually.

This injection and subsequent processing of the data through the multiple nodes (pipes) of the network 100, can be controlled by a discrete events processor (which handles event processing and time management, either in real-time or non-real time). In other words, the discrete events processor manages injecting, on entry to the system, the next volume of data of all the active services, iteration after iteration. The discrete events processor is one example of means 356, but any suitable means can be used.

In some other implementations, as discussed with reference to FIG. 3 (c), the system implementing the digital twin can implement or embed an optional service rate control mechanism. The service rate control mechanism can provide rate regulation and adaptive pipe capacity, and is an optional process than can be activated on top of the core communication pipes structure and events processing described in FIG. 3 (b). In the example implementation of FIG. 3 (c), instead of injecting data volumes into the pipe regulating the traffic volume per home gateway, the volumes are first submitted to a per service dedicated pipe (shown as "rate control pipes"). These pipes are used for traffic regulation, i.e., intermediate buffering in case of service slowdown, and for re-injection of bits that could have been discarded later along the chain, thereby replicating the retransmission of controlled transport protocols. Only rate-controlled services are injected into the rate control pipes; non rate-controlled services are injected into the gateway pipes, as in FIG. 3 (b).

The service rate control mechanism evaluates, at every iteration or interval (and for every ongoing controlled service), if the rate has to be adapted to account for congestion of the system over the previous iteration. For example, the volume of data buffered in queues and/or discarded along all the subsequent pipes is compared to the expected volume to be transmitted for that service. If the whole submitted data volume for a given controlled service has not been fully transmitted to the home gateway over a given iteration (for example when the services suffers from delay and/or packet discard), the service can be slowed down and its bitrate can be decreased for the next iteration. The decrease in rate can be determined in accordance with the volume of data (in bytes) which has been buffered and/or discarded, and/or by application of regulation mechanisms similar to real control mechanisms. In networks with high congestion, the decrease in rate may be higher than if the congestion is low. In other words, an amplitude of the decrease in rate can be dependent on a level of congestion within the network. Optionally, in some examples the portion of the data volume of a given service at a given iteration that would have been thrown in discard at any pipe layer will be re-injected to the correct service control pipe, resulting in retransmission of this "lost" data.

With further reference to FIG. 3 (a), the means 356 thus controls the processing of the time sequence 360 (representing the volume of data aggregated over the traffic sequences of each the multiple services 112 executing on the devices 110) through the multiple nodes (pipes) of the network 100, considering the mix of services 112 and the network capacity (queuing, bottlenecks, packet loss/discards, etc.) and determines the resulting transfer of data for every service 112 on a per interval basis, and can mimic how broadband communication networks work and replicating all their underlying effects (congestion, delays, service control, packet loss, etc.).

The system also comprises means 358 for outputting information indicative of the flow of the volume of data. The specific information to be output, and a level of granularity of the output, can be determined or selected by a user, or may be configured automatically by the means 358 depending on the input first and second values. The granularity of the output can be the same as the granularity of the input, e.g. representing a time interval at which the volume flow of data is injected and thus a time interval at which a measurement or counter of the flow of the volume of data is output. An example of information being output is shown at Step 4.

The means 358 can be configured to output the information to a remote system or device, for example by transmitting the information over any suitable wireless or wired connection. In some examples, the output information detailing the flow of the volume of data can be provided or reported to a user by the means 358. Additionally or alternatively, the means 358 can be configured to present the information to a user, for example, by causing a display to present the information. By outputting this information indicative of the flow of the volume of data, means 358 facilitates reporting of the network usage at multiple different network nodes or pipes. For example, output can be provided at one, multiple or every communication pipe of FIG. 3 (b) or 3 (c).

The information output by means 358 can include any suitable information indicative of the flow of the volume of data per time interval. In one implementation, the output information includes one or more data traffic patterns. Traffic data patterns can be indicative of the volumes of data transmitted, queued and/or discarded per time interval. For example, the output information can include data detailing the volume of data of each service type that was transmitted, queued, or discarded at every sampling interval and/or the conditions of packet delay and/or information about impacts on the transmission of each service. In some examples, the output information can include information about the impacts of services 112 on each other, both in the same stream and in opposite streams (i.e. where the upstream impacts the downstream packets, or vice versa). In some examples, the output information can include information about initial buffer rates, buffer periods or the like. In some specific examples, a complete set of traffic data (upstream/downstream exchanged bytes, upstream/downstream discarded bytes, upstream/downstream queued bytes, etc.) can be output. Optionally the output information can be output at the individual user level or at the network level, or at a different level of granularity (as required).

In some examples, the information indicative of the flow of the volume of data can comprise one or more of: a volume of transmitted data, a volume of queued data, a volume of discarded data, an indication of quality of service, an indication of service slow down, an indication of service delay, a state of a data queue, and an impact qualification. The impact qualification can indicate a reason for delay and/or service degradation (i.e. is it because of a user's own usage of the access link 104 with respect to their service level agreement (SLA) and, if so, is it because of the traffic up or down, or is it due to other users sharing the same access link and thus due to a congestion of the access link, downlink or uplink). The impact qualification can also indicate a type of slow down, i.e. data volumes starting to be queued or the presence of discarded data volumes. The information indicative of the flow of the volume data can be provided in upstream and/or downstream directions.

In one specific example, the means 358 can monitor the volume flow of data across the network for every service 112 and at every sampling interval in order to obtain output data traffic patterns. For example, the means 358 can count the volume of data that is transmitted across a respective communication pipe, stored in queues at the respective communication pipe or discarded at the respective communication pipe and then report the count in a usage counter. The count can be aggregated across services, or a separate count can be maintained for each service. The count can be aggregated according to the determined level of granularity of the output. Throughout the duration of the analysis, additional information about impacts on the provision of other services 112 (such as network congestion, packet queueing, impact of a service stream on the other due to service prioritization, etc.) can also be logged.

In one specific implementation, referring to Step 4 at FIG. 3, every unit volume of data (for example, every data byte) that passes through the pipe implementing the access node 102 is counted and recorded in a dedicated usage counter and reported as part of the output at the end of the simulation or test scenario. In this example, the means 358 for outputting information indicative of the flow of the volume of data comprises means 358 for outputting information indicative of the flow of the volume of data through the access node 102. For example, the means 358 can count the volume of data that was transmitted across the simulated access network 104, stored in queues at the simulated access node 102 or discarded at the simulated access node 102 and then report the count in a usage counter. However, the output can be taken at any suitable part of network 100.

In some examples, output information also includes the data volumes discarded at every pipe level. In some examples, the output information includes a record of the data traffic successfully transmitted through all the pipes corresponding to each of the home gateways 108. The output information can provide an indication of the volume of traffic (i.e. number of bytes of data) at each sampling time interval. In some other implementations, the volume can be aggregated over N sampling intervals, depending on the configuration of the digital twin. In some other examples, the output information can include, per gateway 108 and/or per service 112, the number of bytes exchanged (i.e., the data usage). In some other examples, the number of bytes exchanged can be considered at a user profile level (e.g., for policing of end users) and/or at access link level (e.g., to determine network congestion). Optionally, the output information can additionally or alternatively include quality of service or quality of experience information.

With further reference to Step 5, the information being output can comprise a respective data set, each data set representing a different simulation performed with the digital twin. These data sets can be used to assess different network configurations and scenarios, perform testing of the network, and in training a machine learning model, for example. In other words, by repeating the process described with reference to Steps 1 to 5, but with different initial conditions (i.e. with different first and second values selected from the probability distributions 200), the digital twin described herein enables the creation of data sets comprising of hundreds of thousands, optionally millions, of different combinations of services 112 and service usage sequences, across multiple different network topologies and end-user profiles. In other words, the output from the means 358 can comprise information regarding multiple combinations of services, end users, service schedules and interval granularities. An approach for representing a network at both an individual, user specific, level and a macroscopic network level is therefore provided by use of said digital twin.

The output information can be configured as labelled data, allowing for use of the information in the training of one or more machine learning models. In this way, the digital twin described herein can enable the creation of relevant data and data sets suitable for training and evaluating machine learning models or AI-based features. This can be of particular advantage where the machine learning models or AI-based features are implemented for methods of purposes which require realistic traffic traces matching real-world access network behaviours, either macroscopically (at the network level) or specifically (per subscriber, per PON levels). In this way, data can be provided for training said models/features more quickly and efficiently than when measured data is used for such training.

However, the output information can be used for purposes other than to produce data sets. In another example, the output information can be used for capacity planning for the introduction of new users, or a new topology, to a network and/or to assess the impact of an upgrade of network technology. In particular, due to the selection of the first and second values from respective probabilistic distributions, the digital twin can enable the running of statistical analysis on different network topologies and/or different access link technologies in order to understand the impacts of the topology and/or technology on throughput efficiency, congestion and volume of discarded traffic. In some examples, this statistical analysis can be used to find an optimal configuration, either at an individual user level or on average at a wider network scale. More efficient networks may therefore be designed or configured.

The above-described system for implementing a digital twin of a network is further shown in FIG. 3 (d). In particular, a system 300 for implementing a digital twin of network 100 is shown. The means of system 300 can be provided separately and/or some or all of the means can be combined in one or more software or hardware modules, as appropriate.

The system 300 comprises means 350 for selecting one or more first values 344, wherein each first value represents a respective parameter of a configuration of the network and is selected from a probabilistic distribution 200A associated with the respective parameter of the configuration of the network. The one or more first values can be associated with network values. The network values can include one or more of: a capacity, a buffer size, and a discard policy.

The system comprises means 354 for selecting one or more second values 346, wherein each second value represents a respective parameter of a service to be executed on the one or more end devices and is selected from a probabilistic distribution 200B associated with the respective parameter of the service to be executed, each service associated with transmission of one or more data packets through the network. The one or more second values can be associated with service values. The service values can include one or more of: a volume of bits, a schedule, and a latency or round-trip time.

The system optionally comprises means 340 for storing each probabilistic distribution 200A associated with the respective parameter of the configuration of the network and each probabilistic distribution 200B associated with the respective parameter of the service to be executed. Additionally or alternatively, the system may optionally further comprise means 342 for accessing each probabilistic distribution 200A associated with the respective parameter of the configuration of the network and each probabilistic distribution 200B associated with the respective parameter of the service to be executed.

The system 300 further comprises means 354 for determining, based on the one or more selected second values, a time sequence representing a volume of data to be injected into the network at each of one or more time intervals. The system 300 further comprises means 356 for determining, based on the one or more selected first values and the time sequence, a flow of the volume of data through the network. The means for determining 356 can further comprise: means for injecting the volume of data into the network at each of the one or more intervals; and means for processing the flow of each injected volume of data through the network at each respective time interval to determine the (overall) flow of the volume of data. The system further comprises means 358 for outputting information 348 indicative of the flow of the volume of data.

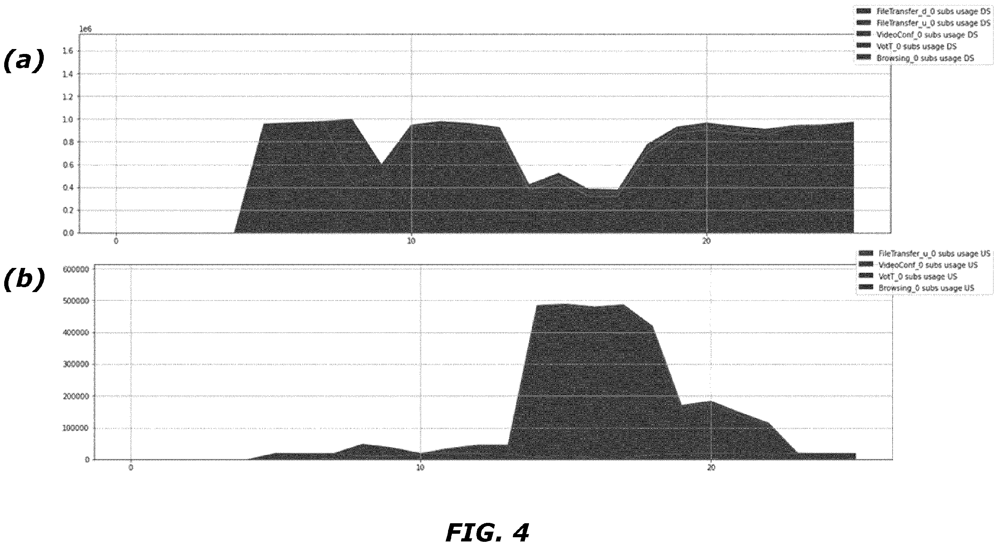

Examples of information 348 output by means 358 are now discussed below in more detail with reference to FIGs. 4 (a) to 7 (d).

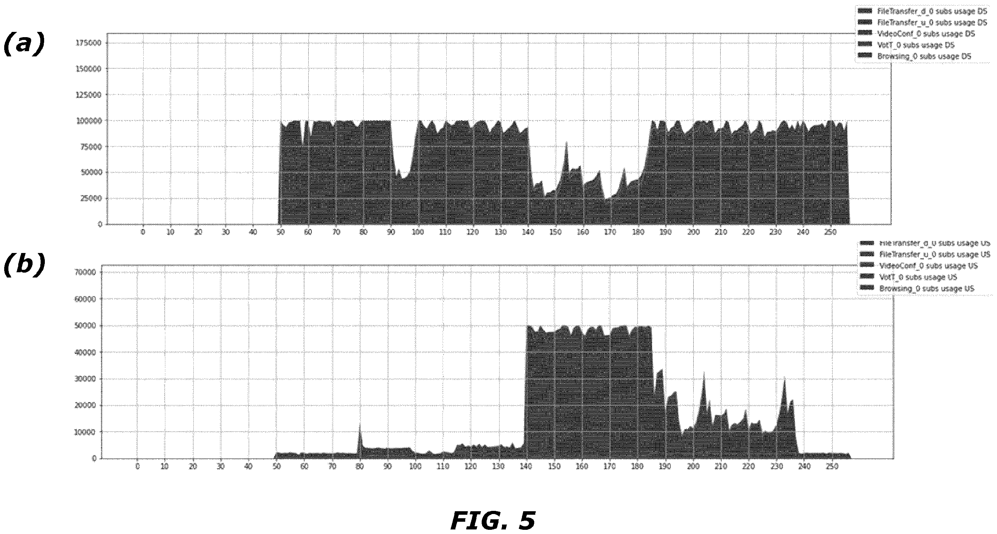

FIGs. 4 (a) and (b) illustrate example traffic patterns (e.g., a volume of data at each interval). In particular, there is illustrated downstream and upstream traffic traces of exchanged bytes, aggregated into 10 second intervals (e.g. 10 second granularity); the traffic comprises data packets from services launched at/from end devices 110 and the network technology is chosen to be PON. In the examples of FIG. 4 (a), which shows the downstream traffic trace, and FIG. 4 (b), which shows the upstream traffic trace, the services 112 include: file transfer, video conferencing, video over the top and browsing. FIGs. 5 (a) and (b) illustrates the same traffic patterns as FIG. 4 (a) and (b), but with the output aggregated at 1 second intervals (e.g., 1 second granularity). As with FIG. 4 (a), FIG. 5 (a) shows the downstream traffic trace, and FIG. 5 (b) shows the upstream traffic trace; the network conditions and service type remain the same between the examples FIGs. 4 (a) and (b) and FIGs. 5 (a) and (b).

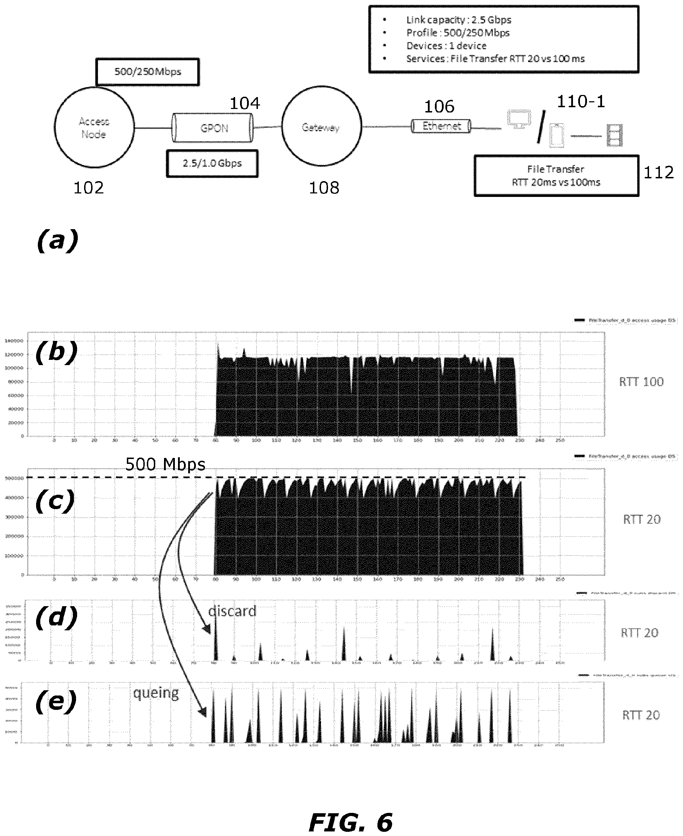

FIGs. 6 (b) to (e) illustrate example traffic patterns for an exemplary network, which network is shown in FIG. 6 (a). The network comprises an access node 102, an access network 104 using GPON technology, a home/user gateway 108, and an end/home network 106 comprising an ethernet connection to a single end device 110-1 running a file transfer service. The user has an SLA or profile with a download/upload speed of 500/250 Mbps, and the access network has a capacity of 2.5 Gbps. FIG. 6 (b) shows an example traffic pattern for a round trip time of 100ms for the file transfer service 112. In this instance, all data volumes (e.g. all packets) are transmitted because the data usage does not ever reach the 500 Mbps limit. In contrast, FIG. 6 (c) shows an example traffic pattern for a round trip time of 20ms for the file transfer service 112. The dotted line illustrates a data usage of 500 Mbps. In this instance, as can be seen from FIG. 6 (d), some data (e.g. packets) are discarded and some data is queued, as shown in FIG. 6 (e).

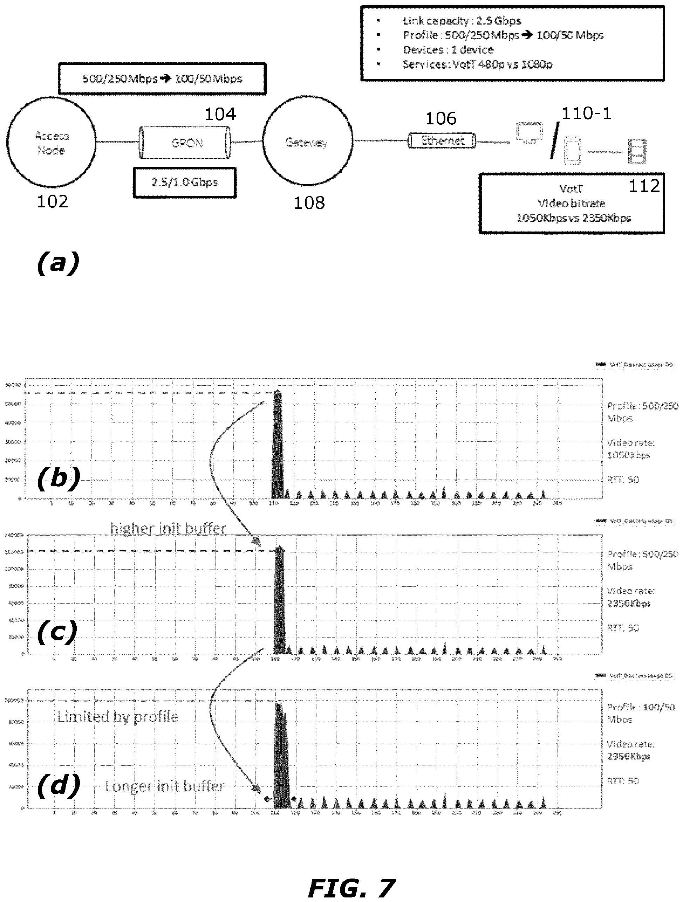

FIGs. 7 (b) to (d) illustrate example traffic patterns for an exemplary network, which network is shown in FIG. 7 (a). The network comprises an access node 102, an access network 104 using GPON technology, a home/user gateway 108, and an end/home network 106 comprising an ethernet connection to a single end device 110-1 running a video over the top (VOTT) service 112 with a video bitrate of 1050 Kbps in one example and a video bitrate of 2350 Kbps in another example. The user has an SLA or profile with a download/upload speed of 500/250 Mbps in one example, and download/upload speed of 100/50 Mbps in another example. The access network has a capacity of 2.5 Gbps. FIG. 7 (b) shows an example initial buffering rate for a video bitrate of 1050Kbps for the VOTT service 112. In comparison, FIG. 7 (c) shows an example initial buffering pattern for a video bitrate of 2350 Kbps for the VOTT service 112. In both cases, the user profile speed is 500 Mbps. It can be seen that there is a higher initial buffer rate in the case of FIG. 7 (c) than that of FIG. 7 (b). In another comparative example, FIG. 7 (d) shows an example initial buffering pattern for a video bitrate of 2350 Kbps for the VOTT service 112, but for a user profile speed of 100 Mbps. Since the buffer rate is limited by the profile of the user, there is a longer initial buffer in the case of FIG. 7 (d) than that of FIG. 7 (c).

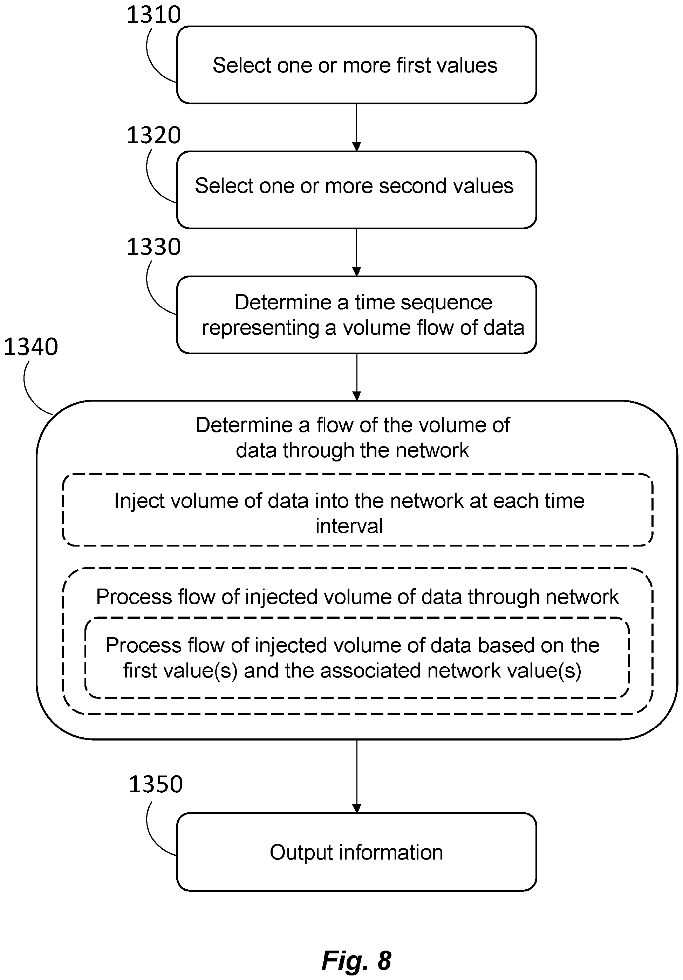

FIG. 8 is a flow diagram showing operations for implementing a digital twin of a network. The operations can be performed by the system 300 and means discussed above.

A first operation 1310 may comprise selecting one or more first values, wherein each first value represents a respective parameter of a configuration of the network and is selected from a probabilistic distribution associated with the respective parameter of the configuration of the network. The one or more first values can be associated with network values. The network values can include one or more of: a capacity, a buffer size, and a discard policy.

A second operation 1320 may comprise selecting one or more second values, wherein each second value represents a respective parameter of a service to be executed on the one or more end devices and is selected from a probabilistic distribution associated with the respective parameter of the service to be executed, each service associated with transmission of one or more data packets through the network. The one or more second values can be associated with service values. The service values can include one or more of: a volume of bits, a schedule, and a latency or round-trip time.

A third operation 1330 may comprise determining, based on the one or more selected second values, a time sequence representing a volume of data to be injected into the network at each of one or more time intervals. A fourth operation 1340 may comprise determining, based on the one or more selected first values and the time sequence, a flow of the volume of data through the network. A fifth operation 1350 may comprise outputting information indicative of the (determined) flow of the volume of data.

Optionally, the operation of determining 1340 can comprise injecting the volume of data into the network at each of the one or more time intervals and then processing the flow of each injected volume of data through the network at each respective time interval to determine the overall flow of the volume of data. Optionally, the operation of processing can comprise processing the volume data flow according to the one or more first values (and the associated network values); in other words, the processing can comprise processing the volume data flow according to the capacity chain defined by the network values for the network (capacity, buffer size, discard policy), where the network configuration is itself defined in accordance with the selected one or more first values.

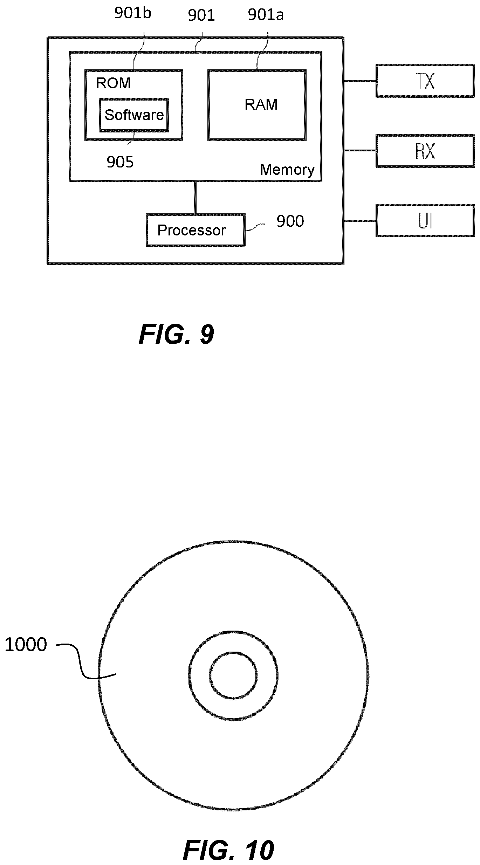

FIG. 9 shows an apparatus according to some example embodiments, which may comprise the system 300 (and any means described in association with the system). The apparatus may be configured to perform the operations described herein, for example operations described with reference to any disclosed process. The apparatus comprises at least one processor 900 and at least one memory 901 directly or closely connected to the processor. The memory 901 includes at least one random access memory (RAM) 901a and at least one read-only memory (ROM) 901b. Computer program code (software) 905 is stored in the ROM 901b. The apparatus may be connected to a transmitter (TX) and a receiver (RX). The apparatus may, optionally, be connected with a user interface (UI) for instructing the apparatus and/or for outputting data. The at least one processor 900, with the at least one memory 901 and the computer program code 905 are arranged to cause the apparatus to at least perform at least the method according to any preceding process, for example as disclosed in relation to the flow diagram of FIG. 8 and related features thereof. The at least one memory 901 may also comprise the digital twin described herein, and optionally the stored probabilistic distributions 200 (for example, means 340 for storing may comprise the at least one memory 901).

FIG. 10 shows a non-transitory media 1000 according to some embodiments. The non-transitory media 1000 is a computer readable storage medium. It may be e.g., a CD, a DVD, a USB stick, a blue ray disk, etc. The non-transitory media 1000 stores computer program code, causing an apparatus to perform the method of any preceding process for example as disclosed in relation to the flow diagrams and related features thereof. A memory may be volatile or non-volatile. It may be e.g., a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above-described blocks, apparatuses, systems, techniques, or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. A system implementing a digital twin of a network, the system comprising:
means for selecting one or more first values, wherein each first value represents a respective parameter of a configuration of the network and is selected from a probabilistic distribution associated with the respective parameter of the configuration of the network;
means for selecting one or more second values, wherein each second value represents a respective parameter of a service to be executed on one or more end devices of the network and is selected from a probabilistic distribution associated with the respective parameter of the service to be executed, each service associated with transmission of one or more data packets through the network;
means for determining, based on the one or more selected second values, a time sequence representing a volume of data to be injected into the network at each of one or more time intervals;
means for determining, based on the one or more selected first values and the time sequence, a flow of the volume of data through the network; and
means for outputting information indicative of the flow of the volume of data.

2. The system of claim 1, wherein the means for determining a flow of the volume of data through the network comprises:
means for configuring a simulation of the network based on the one or more selected first values;
means for injecting the time sequence into the configured simulation of the network; and
means for determining the flow of the volume of data through the configured simulation of the network.

3. The system of claim 1 or claim 2, wherein:
the means for determining, based on the one or more selected second values, a time sequence to be injected into the network comprises means for determining the time sequence based on one or more of: a volume of bits associated with the one or more selected second values, a schedule associated with the one or more selected second values, and a latency associated with the one or more selected second values; and/or
the means for determining, based on the one or more selected first values and the time sequence, a flow of the volume of data through the network comprises means for determining the flow of the volume of data based on one or more of: a capacity associated with the one or more selected first values, a buffer size associated with the one or more selected first values, and a discard policy associated with the one or more selected first values.

4. The system of any preceding claim, wherein:
the means for selecting the one or more first values comprises means for automatically selecting the one or more first values; and/or
the means for selecting the one or more second values comprises means for automatically selecting the one or more second values.

5. The system of any preceding claim, further comprising:
means for receiving, based on user input, one or more other first values representing a respective parameter of the configuration of the network, wherein determining the flow of the volume of data through the network is further based on the one or more received other first values; and/or
means for receiving, based on user input, one or more other second values representing a respective parameter of the service to be executed on the one or more end devices, wherein determining the time sequence to be injected into the network is further based on the one or more received other second values.

6. The system of any preceding claim, wherein the network comprises: one or more home gateways; one or more home networks; the one or more end devices, the one or more end devices behind the one or more home gateways and connected to the one or more gateways via the one or more home networks; an access node that provides access to one or more service providers, the one or more service providers configured to provide the service to be executed on the one or more end devices; and an access network connected between the access node and the one or more home gateways.

7. The system of claim 6, wherein:
the time sequence is injected into the access node; and/or
the means for outputting information indicative of the flow of the volume of data comprises means for outputting information indicative of the flow of the volume of data through the access node.

8. The system of any preceding claim, wherein the information indicative of the flow of the volume of data comprises one or more of: a volume of transmitted data, a volume of queued data, a volume of discarded data, an indication of quality of service, an indication of service slow down, an indication of service delay, a state of a data queue, and an impact qualification.

9. The system of any preceding claim, wherein parameters of the configuration of the network include one or more of:
a type, connection or characteristic of a network node, optionally, wherein the characteristic of the network node comprises a technology of the network node, the technology comprising one of: Asymmetric Digital Subscriber Line (ADSL), Very high-speed digital subscriber line (VDSL), GFast, Gigabit Passive Optical Network (GPON), 10-Gigabit passive optical network (XGPON), or 10-Gigabit symmetrical Passive Optical Network (XGSPON); and/or
a number of gateways, a number of end devices, a type of an end device, or a network subscription.

10. The system of any preceding claim, wherein parameters of the service to be executed on the one or more end devices include one or more of:
a type, schedule, or characteristic of the service, optionally, wherein the type of the service comprises: Audio, Browsing, File Transfer, Gaming, internet of things, internet protocol television, Video Conferencing, voice over internet protocol, or video over the top; and/or.
a number of services per end device.

11. The system of any preceding claim, wherein each probabilistic distribution is determined based on data measured from real-world networks.

12. The system of any preceding claim, wherein the means for selecting the one or more second values comprises means for selecting the one or more second values in dependence on the one or more selected first values.

13. The system of any preceding claims, further comprising:
means for storing each probabilistic distribution associated with the respective parameter of the configuration of the network and each probabilistic distribution associated with the respective parameter of the service to be executed; and/or
means for accessing each probabilistic distribution associated with the respective parameter of the configuration of the network and each probabilistic distribution associated with the respective parameter of the service to be executed from a remote storage device.

14. A method for implementing a digital twin of a network, the method comprising:
selecting one or more first values, wherein each first value represents a respective parameter of a configuration of the network and is selected from a probabilistic distribution associated with the respective parameter of the configuration of the network;
selecting one or more second values, wherein each second value represents a respective parameter of a service to be executed on one or more end devices of the network and is selected from a probabilistic distribution associated with the respective parameter of the service to be executed, each service associated with transmission of one or more data packets through the network;
determining, based on the one or more selected second values, a time sequence representing a volume of data to be injected into the network at each of one or more time intervals;
determining, based on the one or more selected first values and the time sequence, a flow of the volume of data through the network; and
outputting information indicative of the flow of the volume of data.

15. A computer program comprising instructions for causing an apparatus to:
select one or more first values, wherein each first value represents a respective parameter of a configuration of the network and is selected from a probabilistic distribution associated with the respective parameter of the configuration of the network;
select one or more second values, wherein each second value represents a respective parameter of a service to be executed on one or more end devices of the network and is selected from a probabilistic distribution associated with the respective parameter of the service to be executed, each service associated with transmission of one or more data packets through the network;
determine, based on the one or more selected second values, a time sequence representing a volume of data to be injected into the network at each of one or more time intervals;
determine, based on the one or more selected first values and the time sequence, a flow of the volume of data through the network; and
output information indicative of the flow of the volume of data.
